# EUROPÄISCHE PATENTANMELDUNG

(11) **EP 1 106 893 A1**
(43) Veröffentlichungstag der Anmeldung: **13.06.2001**
(21) Anmeldenummer: 00125813.6
(22) Anmeldetag: 24.11.2000
(51) Int. Cl.: F16L 23/024

(54) **Vorrichtung zur lösbaren Verbindung eines zylinderrohrförmigen Targetteiles mit einem Aufnahmeteil**

(30) Priorität: 06.12.1999 DE 19958666
(71) Anmelder: Unaxis Materials Deutschland GmbH, 63450 Hanau (DE)
(72) Erfinder: Schlott, Martin, 63075 Offenbach (DE); Kutzner, Martin, 63543 Neuburg (DE); Heindel, Josef, 63512 Hainburg (DE)
(74) Vertreter: Herrmann-Trentepohl, Werner, Dipl.-Ing.

(57) **Zusammenfassung**

Bei einer Vorrichtung zur lösbaren Verbindung eines insbesondere zylindrischen rohrförmigen Targetteiles (2) mit einem anlagenseitigen Aufnahmeteil (1) mittels eines insbesondere ringförmigen Überwurfelementes (6,7), der am Targetteil und am Aufnahmeteil angreift und durch den das Aufnahmeteil und das Targetteil unter vakuumdichter Verpressung einer zwischen diesen Teilen befindlichen Dichtung (3) in Axialrichtung miteinander verspannbar sind, ist das Überwurfelement in wenigstens zwei voneinander trennbare Teilkörper (6,7) geteilt, von denen der erste Teilkörper am Targetteil und der zweite Teilkörper am Aufnahmeteil angreift.

## Beschreibung

Die Erfindung betrifft eine Vorrichtung gemäß dem Oberbegriff des Anspruches 1.

Zylindertargets werden in zunehmendem Umfange bei Sputterprozessen im Bereich der Großflächenbeschichtung eingesetzt. Beispiele sind auf Trägerrohre aufgelötete, aufgegossene oder durch thermisches Spritzen aufgetragene Targets auf der Basis von Zinn, Indium, Zink, Silber und verwandten Legierungen. Es gibt aber auch monolithisch gefertigte, entsprechend geformte Targets z.B. aus Silber, Kupfer, Edelstahl oder dergleichen.

Diese Targets werden beispielsweise mit Hilfe eines Teilchenbeschleunigers, z.B. eines Magnetrons, beschossen bzw. bestrahlt. Dazu muß das zylinderrohrförmige Targetteil mit einem ebenfalls zylindrischen Abschnitt eines anlagenseitigen Aufnahmeteiles verbunden werden und an diesem Aufnahmeteil auf diese Weise befestigt werden. Dabei bildet dann das zylinderrohrförmige Targetteil in Axialrichtung die Verlängerung des Aufnahmeteiles.

Die Bestrahlung des Targets mit Teilchen eines Teilchenbeschleunigers muß in einem Hochvakuum vorgenommen werden, weil sonst die für den Beschuß vorgesehenen Teilchen in einer Restatmosphäre abgebremst oder abgelenkt würden. Der Außenbereich des zylindrrohrförmigen Targetteiles ist also ein Vakuumbereich. Innerhalb des Zylinderrohres ist jedoch eine Kühlung vorgesehen, die normalerweise Bestandteil eines Kühlwassersystems ist. Das Innere des Zylinderrohres muß also von der Außenumgebung des Zylinderrohres vakuumdicht auch im Bereich der Verbindung zwischen dem Aufnahmeteil und dem Targetteil getrennt werden.

Hierfür ist eine Verbindungsvorrichtung vorzusehen, die die beiden Teile mechanisch miteinander verbindet und gleichzeitig die Teile aneinanderpreßt, um auf diese Weise, mit Hilfe eines verspannbaren Verbindungsorgans, eine zwischen den beiden Teilen befindliche Dichtung, z.B. einen O-Ring, vakuumdicht zu verpressen, also möglichst mit mehreren kreisförmigen Anlagelinien in einen Dichtungssitz hineinzudrücken.

Eine entsprechend geeignete Verbindungsvorrichtung ist aus der US-A-5 591 314 bekannt. Bei dieser bekannten Verbindungsvorrichtung werden ein Aufnahmeteil und ein Targetteil mit Hilfe eines Überwurfringes miteinander verbunden. Das Aufnahmeteil weist an seiner dem Targetteil zugewandten Stirnseite einen radial nach außen vorspringenden Kragen auf, der flanschartig ausgebildet ist und von dem Überwurfring formschlüssig hintergriffen wird. Dazu weist der Überwurfring einen radial einwärts gerichteten Kragen auf, der mit dem auswärts gerichteten Kragen des Aufnahmeteiles in Befestigungsstellung Anschlag auf Anschlag sitzt.

Im Endabschnitt des Targetteiles ist an dessen Außenseite in eine wendelförmige Nut eine entsprechend wendelförmige Feder eingelegt, die in dieser Anordnung ein Außengewinde bildet. Der Überwurfring weist ein dazu passendes Innengewinde auf, so daß der Überwurfring auf das Außengewinde des Targetteiles aufgeschraubt werden kann und auf diese Weise verspannt wird, wobei die Stirnseiten des Aufnahmeteiles und des Targetteiles aneinander gedrückt werden. Zwischen den beiden Stirnseiten dieser beiden Teile befindet sich ein O-Ring als Dichtung in einem Dichtungssitz. Der Dichtungssitz ist so geformt, daß der 0-Ring gegen die angeschrägte Stirnseite des zylinderrohrförmigen Targetteiles sowie gegen zwei Flächen des Dichtungssitzes im anlagenseitigen Gegenstück dichtet. Dabei trennt diese Dichtung vakuumsicher den Kühlwasserkreislauf im Innern des rohrförmigen Targets der Kathode einer geeigneten Anlage vom Vakuum der Kammer dieser Anlage.

Die geschilderte, bekannte Verbindungsvorrichtung hat sich in der Praxis durchaus bewährt. Sie ist aber nur mit einem relativ großen und aus Kostengründen eigentlich untolerierbaren Herstellungsaufwand zu fertigen. Dies liegt in erster Linie daran, daß eine entsprechende Gewindenut in das Targetteil eingebracht bzw. eingearbeitet werden muß, in die dann die entsprechende Gewindefeder als Außengewinde einlegbar ist. Dies ist insbesondere bei monolithischen Rohrtargets sehr schwierig und u.U. im Hinblick auf eine Fehlbearbeitung auch riskant.

Der Erfindung liegt daher die Aufgabe zugrunde, eine Verbindungsvorrichtung der eingangs genannten Gattung aufzuzeigen, die genauso zuverlässig funktioniert wie die bekannte Verbindungsvorrichtung, jedoch mit einem geringeren Aufwand leichter, und damit kostengünstiger, herzustellen ist.

Diese Aufgabe wird erfindungsgemäß durch die Merkmale des kennzeichnenden Teils des Hauptanspruches gelöst.

Nach Maßgabe der Erfindung ist das Überwurfelement in wenigstens zwei Teile aufgegliedert, die vorzugsweise als Ringe ausgebildet sind. Diese Teilringe greifen einmal am Targetteil und zum anderen am Aufnahmeteil an. Zum Verspannen dieser beiden Teilringe bedarf es aber nurmehr einfacher Spanneinrichtungen, die punktuell angreifen können, wodurch sich die Fertigungskästen maßgeblich reduzieren. Dabei ist bevorzugt, daß das Überwurfelement als Ring ausgebildet ist, so daß die beiden Teilkörper als Teilringe gebildet sind. Anstelle der ringförmigen Ausbildung des Überwurfelementes bzw. der Ausbildung der Teilkörper als Teilringe, ist es jedoch auch möglich, das Überwurfelement in beispielsweise einzelne Überwurfschuhe aufzugliedern, etwa drei Überwurfschuhe, die mit gleichmäßigem Abstand zueinander über den Umfang verteilt angeordnet werden und zum Verspannen von Targetteil und Aufnahmeteil dienen. Jeder Überwurfschuh wäre dann in zwei Teilkörper aufgegliedert, wobei die beiden Teilkörper durch eine geeignete Spanneinrichtung, etwa Schraube, miteinander verspannt werden können.

Der notwendige Formschluß des ersten Teilringes am Targetteil kann in relativ einfacher Weise gewährleistet werden. Dazu muß lediglich eine geeignete Eingreifungs- oder Hintergreifungsmöglichkeit am Targetteil vorgesehen werden. Eine solche einfache Umgestaltung oder Weiterbildung ist aber herstellungstechnisch auch an dem Targetteil schnell, leicht und sicher, und insbesondere auch kostengünstig, möglich.

Die für die Abdichtung des Verbindungsbereiches notwendige Verspannung wird bei der Erfindung, im Gegensatz zum Stand der Technik, zwischen den beiden Teilringen selbst vorgenommen. Dazu könnte beispielsweise der erste Teilring, der an dem Targetteil sitzt, mit einem Außengewinde versehen werden, das nunmehr erfindungsgemäß beim Targetteil selbst nicht mehr notwendig ist. Der erste Teilring kann aber separat in sehr viel einfacherer Weise mit herkömmlichen Verfahren, beispielsweise mit herkömmlichen spanabhebenden Maschinen, in präziser und dennoch kostengünstiger Weise bearbeitet werden und dann an dem Targetteil formschlüssig angeordnet werden.

In diesem Sinne zeigt die Erfindung, anders ausgedrückt, eine Möglichkeit auf, einen für die Verbindung benötigten Bereich des Targeteiles von diesem abzukoppeln, um ihn separat für seine Verbindungsfunktion ausbilden und bearbeiten zu können und ansonsten, bis auf die Formschlußmöglichkeit, das Targetteil im übrigen unbehelligt und unversehrt zu belassen.

Die beiden erfindungsgemäßen Teilringe müssen nicht unbedingt durch zueinander passende Außen- und Innengewinde miteinander verschraubt und dadurch miteinander verspannt werden, sondern es kann auch eine mehr oder weniger zusätzliche Spanneinrichtung vorgesehen sein, mit deren Hilfe die beiden Teilringe verspannbar sind. Dabei kann die Spanneinrichtung bei einer bevorzugten Ausbildung der Erfindung in einfacher Weise achsparallel zur Achse der Zylinderform orientierte Spannschrauben umfassen, die zur Verbindung der beiden Teilringe durch diese geführt sind, so daß mit den Spannschrauben die Teilringe zusammengezogen werden können, also der Abstand der beiden Teilringe zueinander vermindert werden kann. Derartige Spannschrauben könnten in regelmäßigen Abständen um die Zylinderform herum verteilt angeordnet sein. Hierzu können Schrauben mit einem Außengewinde verwendet werden, wenn beispielsweise der erste Teilring oder der zweite Teilring ein dazu passendes Innengewinde in einer Schraubenbohrung aufweist. Es könnten natürlich auch Schrauben mit Muttern Verwendung finden. Dabei können herkömmliche Werkzeuge für beispielsweise Sechskantschrauben oder Imbusschrauben eingesetzt werden, so daß auch bei einer solchen Ausführungsform die beiden Teile schnell und sicher miteinander verbunden oder auch wieder voneinander gelöst werden können.

Für den notwendigen Formschluß des ersten Teilringes mit dem Targetteil, der die Spannwirkung der Spanneinrichtung auf das Targetteil übertragen soll, kann eine einfache Vertiefung im Targetteil vorgesehen sein, in die der erste Teilring radial eingreift. Bei dieser Vertiefung handelt es sich vorzugsweise um eine umlaufende Nut.

Der erste Teilring kann selbst wiederum ebenfalls in zwei Ringe zerlegt sein, nämlich in einen ersten Ring, der als Formschlußring bezeichnet werden soll, und in einen zweiten Ring, der als Mantelring bezeichnet werden soll. Der Formschlußring dient zum formschlüssigen Einlegen bzw. Eingreifen in die Vertiefung des Targetteiles, von dem er radial vorragt. Er kann selbst also wiederum für eine formschlüssige Hintergreifung durch den Mantelring des ersten Teilringes dienen, welcher, bei Übertragung der Spannkraft auf den Formschlußring, mit dem zweiten Teilring verspannt wird. Durch die Teilung des ersten Teilringes in einen Formschlußring und in einen Mantelring wird also quasi der erste Teilring funktionell zerlegt in ein Formschlußelement und in ein Spannelement. Dies vereinfacht aber wiederum in kostengünstiger Weise die Fertigung und Bereitstellung der Formschlußbereiche des Targetteiles und des ihm zugeordneten ersten Teilringes.

Der Formschlußbereich des ersten Teilringes bzw. seines Forrnschlußringes kann als Zahnung ausgebildet sein, die in eine entsprechend geformte Vertiefung faßt. Eine kraftaufnehmende Anlage der Zahnung in der Vertiefung muß in erster Linie in Spannrichtung, d.h. in Richtung auf das Aufnahmeteil, wirken. Die Vertiefung und ebenso die Zahnung können also im Querschnitt eine Dreiecksform aufweisen, bei der die dem Aufnahmeteil zugewandte Flanke als radial verlaufende Steilflanke und die andere Seite der Dreiecksform als flach verlaufende Flanke ausgebildet ist. Es entsteht damit also eine Sägezahnform und die Vertiefung wird zu einem Rezess, der von der Zahnung in erster Linie hintergriffen wird.

Für die formschlüssige Einbringung des ersten Teilringes bzw. seines Formschlußringes in das Targetteil und dessen Vertiefung weist der erste Teilring bzw. sein Formschlußring vorzugsweise eine Durchtrennung auf, so daß er durch eine gewisse Spreizung auf den Endabschnitt des Targetteiles aufstreifbar ist. Noch einfacher ist die Anbringung, wenn er in zwei Halbringe quergeteilt ist.

Dabei müssen derartige Halbringe nicht einmal unbedingt unmittelbar miteinander nach dem Aufsetzen verbunden werden, weil die Verbindung der Halbringe miteinander gleichzeitig und automatisch mit der Verbindung des ersten Teilringes mit dem zweiten Teilring geschieht. Die beiden Halbringe des ersten Teilringes oder seines Formschlußringes werden mittelbar durch die Spannfunktion verlustsicher fixiert, insbesondere wenn ein Außengewinde vorgesehen ist, das von einem entsprechenden Innengewinde des zweiten Teilringes insgesamt beim Aufschrauben des zweiten Teilringes von diesem ummantelt wird.

Ausführungsbeispiele, aus denen sich weitere erfinderische Merkmale ergeben, sind in der Zeichnung dargestellt.

Es zeigen:
- Fig. 1: ein erstes Ausführungsbeispiel einer erfindungsgemäßen Verbindungsvorrichtung mit einem ersten und einem zweiten Teilring, die über Gewinde miteinander verschraubt sind, in einem Längsschnitt;
- Fig. 2: einen ersten und einen zweiten Teilring gemäß Fig. 1, die über Spannschrauben miteinander verbunden sind; und
- Fig. 3: einen ersten und einen zweiten Teilring gemäß Fig. 1 mit einem in einen Mantelring und einen Formschlußring geteilten ersten Teilring.

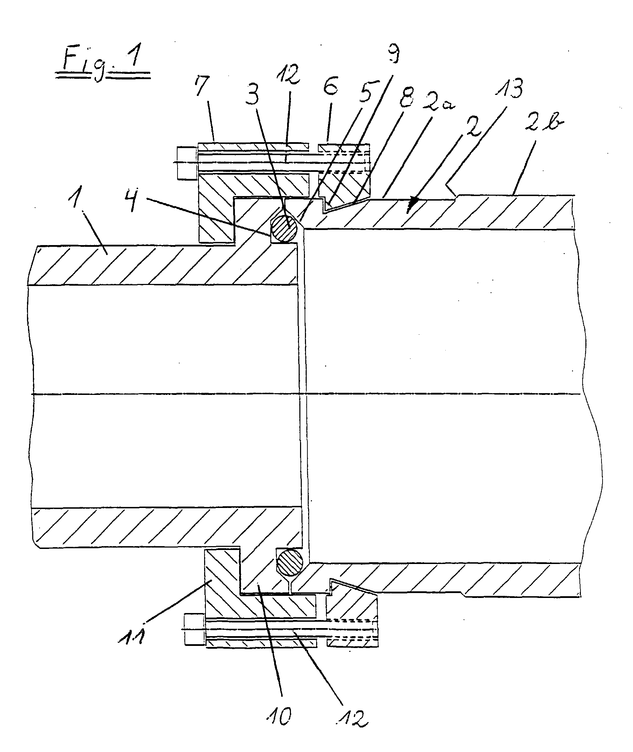

Fig. 1 zeigt im Längsschnitt den zylinderrohrförmigen Endabschnitt eines Aufnahmeteiles 1, das anlagenseitig in einer Sputteranlage montiert ist, und zeigt in axialer Verlängerung dieses Aufnahmeteiles 1 einen zylinderrohrförmigen Endabschnitt eines Targetteiles 2.

Die beiden Stirnseiten des Aufnahmeteiles 1 und des Targetteiles 2 werden aneinandergedrückt, und zwar unter Verpressung eines zwischen diesen Stirnseiten eingelegten O-Ringes 3, der in einen Dichtungssitz 4 der Stirnseite des Aufnahmeteiles 1 eingelegt ist. Die Stirnseite des Targetteiles 2 weist eine Abschrägung 5 auf, die auf den O-Ring 3 einwirkt und diesen in den Dichtungssitz 4 preßt, wobei mehrere kreisförmige Anlagelinien des O-Ringes 3 an der Abschrägung 5 und im Dichtungssitz 4 ausgebildet werden und letztendlich für eine vakuumdichte Abdichtung des Verbindungsbereiches zwischen dem Targetteil 2 und dem Aufnahmeteil 1 sorgen.

Die Verspannung und Verbindung des Targetteiles 2 mit dem Aufnahmeteil 1 geschieht über eine Verbindungsvorrichtung, die erfindungsgemäß einen formschlüssig am Targetteil 2 anordbaren ersten Teilring 6 und einen am Aufnahmeteil 1 formschlüssig anordbaren zweiten Teilring 7 umfaßt.

Für den für die Verpressung der beiden Teile 1, 2 und des dazwischen befindlichen O-Ringes 3 notwendigen Formschluß weist das Targetteil 2 eine umlaufende Vertiefung oder Nut 8 auf, in die eine Zahnung 9 des ersten Teilringes 6 radial eingreift. Das Aufnahmeteil 1 weist einen radial nach außen vorragenden, flanschartigen Kragen 10 auf, der von einem radial einwärts gerichteten Kragen 11 des zweiten Teilringes 7 hintergriffen wird.

Die Verspannung der beiden Teilringe 6, 7 miteinander geschieht mittels achsparallel verlaufender Spannschrauben 12.

Die Nut 8 befindet sich in einem Endbereich 2a des Targetteiles 2, der an seiner Oberfläche bearbeitet ist, während ein daran anschließender Abschnitt 2b, der roh ist und sich deutlich mittels eines Absatzes 13 von dem bearbeiteten Abschnitt 2a abhebt, zur Aufbringung des eigentlichen Targetmaterials dient, das in der Zeichnung nicht näher dargestellt ist. Bei dem Targetteil 2 kann es sich aber auch um ein monolithisches Rohrtarget handeln.

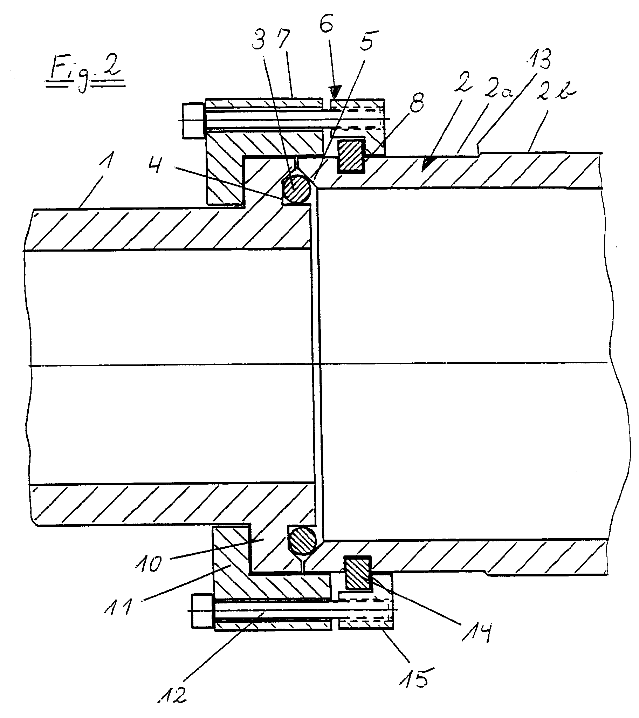

Fig. 2 zeigt ein zweites Ausführungsbeispiel einer erfindungsgemäßen Verbindungsvorrichtung.

Gleiche Bauelemente sind mit den gleichen Bezugszahlen bezeichnet wie in Fig. 1.

Der zweite Teilring 7 ist genauso ausgebildet wie im Ausführungsbeispiel gemäß Fig. 1 und hintergreift mit seinem Kragen 11 einen Kragen 10 des Aufnahmeteiles 1. Der zweite Teilring 7 ist auch mit Spannschrauben 12 mit dem ersten Teilring 6 verbunden.

In dem in Fig. 2 gezeigten Ausführungsbeispiel ist jedoch der erste Teilring seinerseits in zwei Ringe zerlegt, nämlich in einen Formschlußring 14 und in einen Mantelring 15. In den Mantelring 15 sind die Spannschrauben 12 eingeführt, und dieser Mantelring wird mittels der Spannschrauben 12 an den ersten Teilring 7 herangezogen. Der Formschlußring 14 übernimmt die Funktion der Zahnung 9 aus dem Ausführungsbeispiel gemäß Fig. 1 und greift in eine, nun im Querschnitt entsprechend anders ausgeformte Nut 8 des Targetteiles 2 formschlüssig ein. Der Formschlußring 14 wird dabei mittels eines radial einwärts gerichteten Kragens 16 des Mantelringes 15 formschlüssig hintergriffen.

Insbesondere bei diesem Ausführungsbeispiel ist es zur besseren Führung der zusammenwirkenden Bauteile vorteilhaft, wenn die Zylinderflächen der Teile 1, 2, 7, 14 und 15 auf Passung ausgeführt sind und miteinander arbeiten.

Außerdem ist bei der Fertigung dieses Ausführungsbeispieles darauf zu achten, daß der Übergriff des Mantelringes 15 über den Formschlußring 14 kleiner ausgebildet ist als der zum axialen Verschieben des Mantelringes 15 verbleibende Freiraum auf dem bearbeiteten Endabschnitt 2a des Aufnahmeteiles 2 bis zum Absatz 13, damit der Mantelring 15 zum Lösen der Verbindung so weit in Richtung auf den Absatz 13 verschoben werden kann, daß der Formschlußring 14 auch tatsächlich von dem Übergriff des Mantelringes 15 frei kommt.

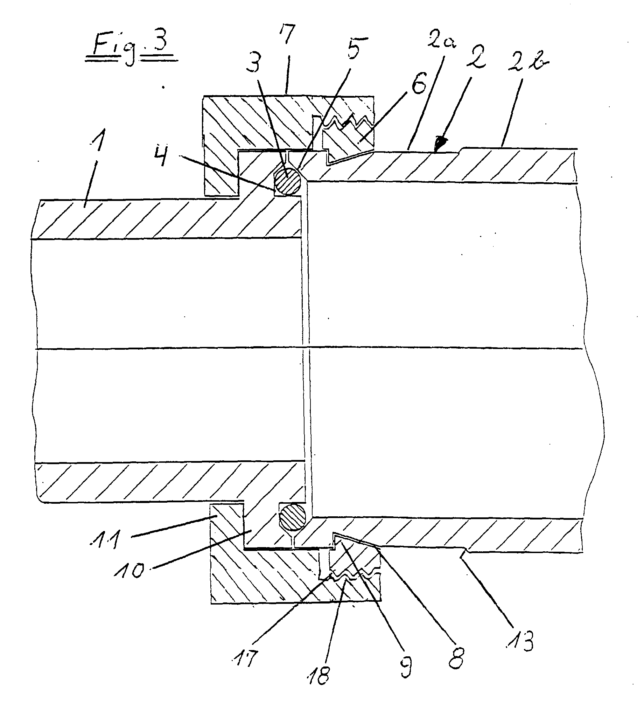

Fig. 3 zeigt ein drittes Ausführungsbeispiel einer erfindungsgemäßen Verbindungsvorrichtung, bei der wiederum die gleichen Bauelemente mit den gleichen Bezugszahlen bezeichnet sind wie in den vorhergehenden Figuren.

Das in Fig. 3 dargestellte Ausführungsbeispiel entspricht im wesentlichen dem Ausführungsbeispiel gemäß Fig. 1.

Wieder ist der erste Teilring 6 mit einer Zahnung 9 versehen, der in eine entsprechend geformte Nut 8 des Targetteiles 2 formschlüssig eingreift.

Auch der zweite Teilring 7 weist wiederum einen radial einwärts gerichteten Kragen 11 auf, der den radial auswärts gerichteten Kragen 10 des Aufnahmeteiles 1 hintergreift.

Die beiden Teilringe 6 und 7 sind jedoch bei diesem Ausführungsbeispiel gemäß Fig. 3 nicht über Spannschraubenl2 miteinander verbunden. Vielmehr wird der erste Teilring 6 von dem zweiten Teilring 7 übergriffen bzw. überlappt, und in diesem Überlappungsbereich weist der erste Teilring 6 ein Außengewinde 17 und der zweite Teilring 7 ein dazu passendes Innengewinde 18 auf. Die beiden Teilringe 6, 7 können mittels dieser Gewinde 17, 18 miteinander verschraubt und verspannt werden.

In allen drei Längsschnittansichten der Ausführungsbeispiele gemäß den Fig. 1 bis 3 ist zeichnerisch nicht erkennbar, daß jeweils der erste Teilring 6 und/oder sein Formschlußring 14 vorzugsweise in Ringabschnitte quergeteilt ist, so daß er beispielsweise aus Ringhälften besteht, die beidseitig an das Targetteil 2 angelegt und in die entsprechende Nut 8 eingelegt werden können. Sie können danach unmittelbar miteinander verbunden werden. Es wird aber wohl ausreichend sein, wenn die beiden Ringabschnitte mittelbar mit Hilfe des zweiten Teilringes 7, des Mantelringes 15 oder der Spannschrauben 12 verbunden werden.

### Bezugszeichenliste

- 1: Aufnahmeteil
- 2: Targetteil (2a, 2b)
- 3: O-Ring
- 4: Dichtungssitz
- 5: Abschrägung
- 6: erster Teilring
- 7: zweiter Teilring
- 8: Nut
- 9: Zahnung
- 10: Kragen von 1
- 11: Kragen von 7
- 12: Spannschrauben
- 13: Absatz
- 14: Formschlußring
- 15: Mantelring
- 16: Kragen von 15
- 17: Außengewinde von 6
- 18: Innengewinde von 7

## Patentansprüche

1. Vorrichtung zur lösbaren Verbindung eines insbesondere zylindrischen rohrförmigen Targetteiles mit einem anlagenseitigen Aufnahmeteil mittels eines insbesondere ringförmigen Überwurfelementes, der am Targetteil und am Aufnahmeteil angreift und durch den das Aufnahmeteil und das Targetteil unter vakuumdichter Verpressung einer zwischen diesen Teilen befind-lichen Dichtung in Axialrichtung miteinander verspannbar sind, **dadurch gekennzeichnet, daß** das Überwurfelement in wenigstens zwei von-einander trennbare Teilkörper (6, 7) geteilt ist, von denen der erste Teilkörper (6) am Targetteil (2) und der zweite Teilkörper (7) am Aufnahmeteil (1) angreift.

2. Vorrichtung nach Anspruch 1, **dadurch gekennzeichnet, daß** das Überwurfelement ringförmig ausgebildet und die Teilringe (6, 7) formschlüssig am Targetteil (2) bzw. Aufnahmeteil (1) angreifen.

3. Vorrichtung nach Anspruch 1 oder 2, **dadurch gekennzeichnet, daß** der erste Teilring (6) und der zweite Teilring (7) über zusammenwirkende Innen- bzw. Außengewindebereiche (17, 18) miteinander verbindbar und gegeneinander verspannbar sind.

4. Vorrichtung nach einem der vorhergehenden Ansprüche, **dadurch gekennzeichnet, daß** der erste Teilring (6) und der zweite Teilring (7) mittels einer Spanneinrichtung miteinander verbindbar und verspannbar sind.

5. Vorrichtung nach Anspruch 4, **dadurch gekennzeichnet, daß** die Spann-einrichtung achsparallel zur Achse der Zylinderform orientierte Spannschrauben (12) umfaßt, die zu deren Verbindung durch die beiden Teilringe (6, 7) geführt sind.

6. Vorrichtung nach einem der vorhergehenden Ansprüche, **dadurch gekennzeichnet, daß** das Targetteil (2) eine Vertiefung aufweist, in die der erste Teilring (6) radial eingreift.

7. Vorrichtung nach Anspruch 6, **dadurch gekennzeichnet, daß** die Vertiefung eine umlaufende Nut (8) ist.

8. Vorrichtung nach Anspruch 7, **dadurch gekennzeichnet, daß** der erste Teilring (6) seinerseits in einen Formschlußring (14) , der in die Vertiefung des Targetteiles (2) eingreift, und in einen Mantelring (15), der den Formschlußring (14) übergreift und an der dem Aufnahmeteil (1) abgewandten Seite hintergreift, geteilt ist.

9. Vorrichtung nach einem der Ansprüche 6 bis 8, **dadurch gekennzeichnet, daß** der erste Teilring (6) bzw. sein Formschlußring (14) wenigstens eine in die entsprechend ausgeformte Vertiefung einfassende Zahnung (9) aufweist.

10. Vorrichtung nach einem der Ansprüche 6 bis 9, **dadurch gekennzeichnet, daß** der erste Teilring (6) oder zumindest sein Formschlußring (14) wenigstens eine quer zur Ringebene verlaufende Durchtrennung aufweist.

11. Vorrichtung nach Anspruch 10, **dadurch gekennzeichnet, daß** der erste Teilring (6) oder sein Formschlußring (14) in Ringabschnitte quergeteilt ist.
